Europäisches Patentamt

European Patent Office

Office européen des brevets

(19)

(11) Publication number: **0 114 391**
**B1**

(12) EUROPEAN PATENT SPECIFICATION

(45) Date of publication of patent specification: **07.09.88**

(21) Application number: **83113039.8**

(22) Date of filing: **23.12.83**

(51) Int. Cl.⁴: **C 08 F 110/06,** C 08 F 2/34,
C 08 F 4/64

(54) **Flexible propylene polymer.**

(30) Priority: **28.12.82 JP 231038/82**

(43) Date of publication of application:
**01.08.84 Bulletin 84/31**

(45) Publication of the grant of the patent:
**07.09.88 Bulletin 88/36**

(84) Designated Contracting States:
**BE DE FR GB IT NL**

(56) References cited:
**EP-A-0 049 436**
**GB-A-1 580 635**
**GB-A-2 000 513**

(73) Proprietor: **SUMITOMO CHEMICAL COMPANY,
LIMITED**
**15 Kitahama 5-chome Higashi-ku**
**Osaka-shi Osaka 541 (JP)**

(72) Inventor: **Kokubo, Toshiyuki**
**1, Kuwatacho-2-chome**
**Ibaraki-shi (JP)**
Inventor: **Nakae, Kiyohiko**
**2-305, Ryodocho-4-chome**
**Nishinomiya-shi (JP)**
Inventor: **Ogawa, Tadatoshi**
**1-1-730, Chiyodacho**
**Takatsuki-shi (JP)**

(74) Representative: **Vossius & Partner**
**Siebertstrasse 4 P.O. Box 86 07 67**
**D-8000 München 86 (DE)**

Courier Press, Leamington Spa, England.

# 0 114 391

**Description**

This invention relates to a novel flexible propylene polymer. More particularly, it relates to a flexible propylene polymer having excellent physical and mechanical properties.

Propylene polymers used hitherto are highly crystalline, so called isotactic, polypropylene. This polypropylene, however, though it has excellent mechanical properties including high rigidity, has poor melt properties such as a small melt tension, and cannot be processed easily when the processing requires a large melt tension. Further, the formed articles thereof have the defect of low weld strength. Moreover, since the films formed thereof by conventional methods are poor in transparency, some special equipment and processing method are required to improve the transparency.

Furthermore, because of its high rigidity and hardness, the polypropylene mentioned above is not suitable for applications where a certain degree of flexibility is required.

There is known a process to produce polypropylene by using a catalyst which yields a low stereospecific polymer in order to impart flexibility to the product. The polypropylene thus obtained has, however, disadvantages in that it has poor mechanical properties and heat resistance, that it has poor processability because of its low melt tension as well as low swelling ratio, and that, when processed into a film, the film shows undesirable blocking tendency owing to bleeding out of atactic polypropylene to its surface. So this product has low commercial value.

In view of these circumstances, the inventors made an extensive study and have found a propylene polymer which has excellent physical and mechanical properties as well as an excellent processability, and is flexible without the disadvantages mentioned above. This invention has been accomplished on the basis of this finding.

An object of this invention is to provide a novel flexible propylene polymer having excellent physical and mechanical properties.

Other objects and advantages of this invention will become apparent from the descriptions that follow.

According to this invention, there is provided a flexible propylene polymer which is a propylene polymer obtained by gas-phase polymerization, said polymer being in particle form after polymerization and having a bulk density of at least 0.27 g/ml, wherein

(1) the ratio of weight average molecular weight to number average molecular weight is from 10 to 100,

(2) the intrinsic viscosity $[\eta]$ is from 0.8 to 10 dl/g,

(3) in the steric pentad fraction as determined by $^{13}$C-NMR, the [mmmm] fraction is from 0.45 to 0.85,

(4) the melt flow ratio (MFR) satisfies the following equation:

$$MFR \geqq -42 \log MI + 133,$$

wherein MI means melt index,

(5) the fusion temperature is from 154 to 164°C,

(6) the heat of fusion if from 5 to 22 cal/g (20.9 to 92.1 J/g),

(7) the intrinsic viscosity $[\eta]_{HSP}$ of the boiling-heptane solution portion (HSP) and the intrinsic viscosity $[\eta]_{HIP}$ of the boiling-heptane insoluble portion (HIP) of said polymer satisfy the following equation:

$$[\eta]_{HSP} \geqq 0.25 \ [\eta]_{HIP},$$

and

(8) in the stearic pentad fraction of the above boiling-heptane insoluble portion as determined by $^{13}$C-NMR, the [mmmm] fraction is from 0.60 to 0.90 and the sum of the [mmmr], [rrrm] and [rrrr] fractions is from 0.07 to 0.30.

The flexible propylene polymer of this invention may be obtained by a process which comprises polymerizing propylene by gas-phase polymerization in the presence of a catalyst comprising (1) a solid catalyst component obtained by allowing silicon tetrachloride to react with an organo-magnesium compound and then treating the magnesium compound obtained with an aryloxytitanium halide or alkoxytitanium halide, (2) an organoaluminium compound component and (3) a carboxylic acid ester or lactone at 30° to 80°C, and at a pressure of atmospheric pressure to about 41 bar (40 kg/cm²).

The flexible propylene polymer of this invention shows a large melt tension as well as a large swelling ratio, has excellent melt flow characteristics and, in spite of its flexibility, a relatively high heat distortion temperature (Vicat softening temperature) and also a high impact strength. This invention will be explained in detail below.

In the polymer of this invention, the value of $\bar{M}_W$ (weight average molecular weight)/$\bar{M}_N$ (number average molecular weight) of the whole polymer is from 10 to 100. Values less than 10 or more than 100 are unfavorable because in the former range the melt tension of the polymer becomes small, while in the latter range the polymer production becomes difficult. Here, the values mentioned above refer to those which are obtained by determining molecular weight distribution by means of gel permeation chromatography and then calculating in a conventional manner the vlaue of $\bar{M}_W/\bar{M}_N$ from the graph of molecular weight distribution thus obtained.

The intrinsic viscosity $[\eta]$ of the whole polymer is from 0.8 to 10, preferably from 1.0 to 8.0, and more

2

preferably from 1.0 to 5.0 dl/g. Intrinsic viscosities below 0.8 dl/g or above 10 dl/g are unfavorable because in both ranges the processing of the polymer becomes difficult. Here, intrinsic viscosities refer to the values determined by means of an Ostwald viscometer in tetralin at 135°C.

In the steric pentad fraction of the whole polymer as determined by $^{13}$C-NMR, the [mmmm] fraction (isotactic pentad fraction) is from 0.45 to 0.85, and preferably from 0.50 to 0.85. Values below 0.45 or above 0.85 are unfavorable because in the former range the formed article obtained from the polymer has a low Shore hardness and heat distortion temperature, while in the latter range the product loses flexibility and is poor in impact strength and, when it is in the form of a film, has a poor transparency.

In the polymer of this invention, the melt flow ratio (MFR) satisfies the following equation:

$$MFR \geqq -42 \log MI + 133,$$

wherein MI means melt index. A propylene polymer wherein the MFR does not satisfy the above equation has, even when the MI is the same, an inferior melt flowability and, in extrusion molding, tends to put too much load on the motor. Here, MI and MFR are determined in the following way. First, MI is determined according to ASTM-D1238-L (expressed in grams per 10 minutes at 230°C under a load of 2.16 kg). Separately, $MI_{21.6}$ is determined in a similar manner except that a load of 21.6 kg is used instead of 2.16 kg. The MFR is calculated from the following equation:

$$MFR \text{ (melt flow ratio)} = MI_{21.6}/MI.$$

The propylene polymer of this invention has a fusion temperature in the range of from 154 to 164°C, and a heat of fusion in the range of from 5 to 22 cal/g (20.9 to 92.1 J/g). When the fusion temperature is below 154°C or the heat of fusion is less than 5 cal/g (20.9 J/g), the polymer is poor in heat resistance. On the other hand, when the fusion temperature is above 164°C or the heat of fusion is more than 22 cal/g (92.1 J/g), the polymer is poor in impact strength and low-temperature resistance. These are unfavorable. Here, the fusion temperature and the heat of fusion are determined in the following way.

Method of determination

A differential scanning calorimeter, DSC-Type II (made by Perkin-Elmer Inc.) is used. Ten mg of a sample is placed in the pan, maintained at 500°K for 5 minutes under a nitrogen gas stream to fuse completely, and then quenched under the same conditions by changing the setting temperature to room temperature. After the temperature of the sample has reached the room temperature, the temperature is raised at a rate of 5°C/minute to give a fusion curve of the sample. The fusion temperature ($T_f$) is determined as the temperature at which the heat-absorption peak of the highest temperature reaches the maximum. Further, the heat of fusion ($\Delta H_f$) is determined from the fusion curve in a conventional manner.

Further, in the polymer of this invention, the intrinsic viscosity $[\eta]_{HSP}$ of the boiling-heptane soluble portion (HSP) and the intrinsic viscosity $[\eta]_{HIP}$ of the boiling-heptane insoluble portion (HIP) should satisfy the following equation:

$$[\eta]_{HSP} \geqq 0.25 \ [\eta]_{HIP}.$$

When the equation is not satisfied in a polymer, the surface state of the formed article thereof is poor because atactic polypropylene is likely to bleed out to the surface.

In the polymer of this invention, in the steric pentad fraction of the boiling-heptane insoluble portion as determined by $^{13}$C-NMR, the [mmmm] fraction is from 0.60 to 0.90 and the sum of the [mmmr], [rrrm] and [rrrr] fractions is from 0.07 to 0.30. A [mmmm] fraction of less than 0.60 or a sum of the above-mentioned fractions of more than 0.30 is unfavorable because the polymer has then poor physical and mechanical properties, particularly a poor heat resistance. On the other hand, a [mmmm] fraction of more than 0.9 or a sum of the above-mentioned fractions of less than 0.07 is unfavorable because the polymer has then a poor flexibility and impact strength. The pentad fraction herein is determined according to the method reported by A. Zambelli et al [Macromolecules, 6, 925 (1973)], namely by means of $^{13}$C-NMR. The [mmmm] pentad fraction is the fraction of propylene monomer units existing in the center of the isotactic chains of a pentad unit in the molecular chain of polypropylene, in other word, chains of five successive sequence of monomer units joined in meso(m) linkages. However, the assignment of NMR absorption peaks is made according to a method reported later [Macromolecules, 8, 867 (1975)]. Specifically, the isotactic pentad fraction is determined as the area fraction of the [mmmm] peak in the total absorption peaks in the methyl-carbon region of $^{13}$C-NMR spectrum.

Similarly, the [mmmr], [rrrr] and [rrrm] fraction are respectively the fraction of propylene monomer units existing in the center of chains of propylene monomer units joined in meso(m) or racemic (r) linkages.

As described in the foregoings, according to this invention, by fulfilling various conditions mentioned above, a propylene polymer can be obtained which has a suitable degree of flexibility and good physical and mechanical properties including heat distortion resistance wnf impact strength.

The production of the polymer of this invention is now described below. A polymerization catlayst to be used favorably is one comprising (1) a solid catalyst component obtained by allowing silicon tetrachloride to react with an ethereal organo-magnesium compound to give a magnesium compound, washing the resulting compound with an inert hydrocarbon solvent followed by drying if necessary, and then treating with an aryloxytitanium halide or alkoxytitanium halide in a hydrocarbon or halohydrocarbon solvent, preferably in chlorobenzene, followed by washing with an inert hydrocarbon solvent, (2) an organoaluminum compound component such as triethylaluminum and triisobutylaluminum and (3) a carboxylic acid ester such as methyl benzoate, sec-butyl benzoate, methyl p-anisate, ethyl p-anisate, ethyl orthoformate, methyl orthoformate and methyl methacrylate; or a lactone such as ε-caprolactone (the third component).

The concentrations of the solid catalyst and the organoaluminum compound can be suitably regulated within the range of from 0.1 to 1000 mg/l and from 0.05 to 50 mmol/l, respectively. The amount of the third component to be used is regulated within the range of from 0.01 to 0.8 mol per 1 mol of the organoaluminum compound so as to give the objective polymer of this invention. The structure and other properties of the resulting polymer vary according to the conditions of catalyst preparation and the kinds of above-mentioned components. Particularly, the intrinsic viscosity, pentad fraction, molecular weight distribution, etc. can be varied by varying the kind and amount of the third component to be used. Accordingly, polymerization is carried out by suitably adjusting the above-mentioned factors so that the resulting polymer may satisfy the conditions of this invention. Also, hydrogen may be used to regulate the intrinsic viscosity of the resulting polymer. Polymerization is carried out in the gas phase. The conditions for polymerization from the industrial viewpoint are selected from the ranges of temperature of from 30 to 80°C and pressure of from atmospheric pressure to about 41 bar.

This invention is featured by a flexible propylene polymer having excellent physical properties and in particle form. There is a method of producing a low stereospecific propylene polymer by polymerization in liquid propylene [Japanese Patent Application "Kokai" (Laid-open) No. 148091/79]. By this method, however, it was difficult to obtain industrially a polymer in powder form having a good flowability. A good flowability of polymer in powder form facilitates the polymer handling in powder transfer, drying and granulation, and thus offers a great advantage to polymer production. It also facilitates the blending of various kinds of additives and colorants with polymer, and enables the production of polymer products having stable qualities. In a liquid-phase polymerization, it is difficult to obtain a flexible propylene polymer of this invention which is in particle form having an excellent flowability and a high bulk density.

The polymer of this invention can be obtained as such when the polymer prepared above falls in the scope of this invention. If necessary, the polymer of this invention can also be obtained by extracting the resulting polymer with a solvent such as heptane or xylene at a suitable temperature to remove a portion thereof.

The polymer of this invention has excellent physical and mechanical properties as well as a good processability as mentioned above, and can be used in various applications including the production of films, yarns, tapes, foamed articles, sheets, as well as blow-molded, injection-molded and vacuum-formed articles.

The propylene polymer of this invention has been found to be particularly suited for following applications.

When used as films, the polymer of this invention has, as compared with conventional polypropylenes (homopolymer or random copolymer; hereinafter referred to as PP), superior heat resistance inspite of its pliability. It has also a good low-temperature heat-sealing characteristic and is favorably used as a sealant. Moreover, as compared with conventional PP, the polymer of this invention can be processed easily to blown film even when its intrinsic viscosity is high, and further, can be subjected to H-type blown film process [cf. Plastics, 29, (12), 70 (1978)] to give a film having a high strength well balanced in machine and transverse directions. A polymer particularly suited for film application has an intrinsic viscosity [η] of from 1.3 to 5.0.

In blow molding applications, the polymer of this invention, as compared with conventional PP, has less tendency to draw down in blow molding and gives a blow-molded article having a more uniform thickness. The blow-molded articles obtained from the polymer of this invention has an excellent heat resistance despite its flexibility, and is excellent in transparency and environmental stress cracking resistance. A polymer particularly suited for this application has an intrinsic viscosity [η] of from 2.0 to 5.0. As compared with conventional PP in applications as sheets, it has the advantage in that, when the formed sheet is subjected to vacuum forming, a uniform deep drawing is possible. A polymer particularly suited for this application has an intrinsic viscosity [η] in the same range as that for blow molding. As compared with conventional PP in applications as tapes or yarns, the polymer of this invention has the advantage in that it is less liable to splitting when stretched uniaxially after being extruded, and gives a pliable product having a high strength. A polymer particularly suited for this application has an intrinsic viscosity [η] of from 1.9 to 5.0.

Further, as compared with conventional PP in injection molding applications, the polymer of this invention gives molded articles which have an excellent heat resistance despite their flexibility and also an excellent hinge characteristics, transparency, environmental stress cracking resistance and weld strength. A polymer particularly suited for injection molding has an intrinsic viscosity [η] of from 1.0 to 3.0.

Various additives including antioxidants, light stabilizers, lubricants, anti-blocking agents, antistatic

4

agents, pigments, dyes and fillers; colorants as well as other polymers may be admixed with the polymer of this invention within limits not deleterious to the objects of this invention.

This invention will be illustrated in detail below with reference to Examples, but it is not limited thereto.

In Examples, the bulk density of the polymer obtained was determined according to JIS-K6721.

Example 1

(a) Synthesis of catalyst-support

Into a 5-liter glass flask fitted with a stirrer, dropping funnel and thermometer, which had been dried under a reduced pressure and flushed with nitrogen, was placed 3 liters of a solution of n-butylmagnesium chloride (n-BuMgCl) in n-butyl ether (containing 6 moles of n-BuMgCl). With stirring under nitrogen atmosphere, 0.7 liter (6 moles) of silicon tetrachloride was added dropwise thereto at 30°C over a period of one hour to form a white precipitate. After completion of the dropwise addition, the mixture was stirred at 30°C for one hour and at 60°C for another hour. The resulting white solid was separated by filtering through a glass filter and washed thoroughly with n-hexane to give 755 g of a white solid.

(b) Synthesis of titanium compound

Into a 5-liter glass flask fitted with a stirrer, dropping funnel and thermometer, which had been dried under a reduced pressure and flushed with nitrogen, were placed 1 liter (9 moles) of titanium tetrachloride and 2 liters of chlorobenzene. Then a mixture of 847 g (9 moles) of phenol and 0.8 liter of chlorobenzene was gradually added dropwise thereto at 60°C with stirring through the dropping funnel. The evolved hydrogen chloride gas was purged under a nitrogen atmosphere. After completion of the dropwise addition, the mixture was stirred at 60°C for 2 hours.

(c) Synthesis of solid catalyst component

Into a 5-liter glass flask fitted with a stirrer, cooler and thermometer, which had been dried under a reduced pressure and flushed with nitrogen, were introduced 300 g of the support obtained in (a) and then 3 liters of the solution of the titanium compound prepared in (b), and the mixture was stirred at 130°C for 3 hours. After completion of the reaction, the product was thoroughly washed with chlorobenzene and n-hexane, and dried under a reduced pressure to give 255 g of a solid catalyst component. On 1 g of the solid catalyst component was supported 58 mg of titanium atoms.

(d) Gas-phase polymerization of propylene

Into an autoclave of 5-liter inner volume fitted with an electromagnetic stirrer and equipped with a catalyst-charging apparatus, was placed 100 g of spherical polyethylene powders having particle diameters of from 500 to 710 μm. After drying the whole at 70°C for 2 hours under a reduced pressure, 20 ml of n-pentane, 1.0 g of triisobutylaluminum, 0.91 m mol of ethyl p-anisate and 40 mg of the solid catalyst component prepared in (c) were introduced into the catalyst-charging apparatus. Then the catalyst mixture was charged into the autoclave by means of a propylene gas pressure to initiate the polymerization. Polymerization was carried out at 65°C under a total pressure of about 9 bar for 3 hours while feeding additional propylene. After completion of polymerization, there was obtained 328 g of a mixture of the polymer formed and the seed polymer. The catalyst activity in this case was 1900 g polypropylene/g solid/hour.

(e) Evaluation of physical properties of flexible polypropylene

The mixture obtained in (d) above was separated by using a sieve into the polymer formed and the seed polymer. The polypropylene obtained was confirmed to be free from polyethylene by infrared absorption spectrometry. The bulk density of the polymer obtained was 0.38 g/ml. The results of determination of the structure and the physical properties of polypropylene obtained were as shown in Table 1.

Example 2

The gas-phase polymerization of propylene in Example 1 was repeated except that 0.66 m mol of ethyl p-anisate was used to yield 364 g of a mixture of the polymer formed and the seed polymer. The catalyst activity in this case was 2200 g polypropylene/g solid/hour. The bulk density of the polymer formed was 0.35 g/ml. The results of evaluation of the polymer formed were as shown in Table 1.

Example 3

The gas-phase polymerization of propylene in Example 1 was repeated except that 0.02 Nl (volume, l, at 0°C, 1 bar (1 atm)) of hydrogen was added to yield 352 g of a mixture of the polymer formed and the seed polymer. The catalyst activity in this case was 2100 g/g solid/hour. The bulk density of the polymer formed was 0.36 g/ml.

Example 4

The gas-phase polymerization of propylene in Example 1 was repeated except that 3 g of triisobutylaluminum and 4.54 m mol of ethyl p-anisate were used to yield 280 g of a mixture of the polymer

**0 114 391**

formed and the seed polymer. The catalyst activity in this case was 1500 g/g solid/hour. The bulk density of the polymer formed was 0.40 g/ml.

Example 5

The polymerization in Example 4 was repeated except that 1.06 m mol of ethyl p-anisate was used to yield 436 g of a mixture of the polymer formed and the seed polymer. The catalyst activity in this case was 2800 g/g solid/hour. The bulk density of the polymer obtained was 0.32 g/ml.

Comparative Example 1

Sumitomo Noblen (a registered trade mark) 501A (made by Sumitomo Chemical Co., Ltd.) was used as a conventional polypropylene to be compared with the polypropylene of this invention. The results of evaluation were as shown in Table 1. As is apparent from Table 1, said polypropylene had a low impact strength and lacked flexibility.

Comparative Example 2

Sumitomo Noblen (a registered trade mark) S-131 (made by Sumitomo Chemical Co., Ltd.) which is a random copolymer containing 4.8% by weight of ethylene was used as a conventional polypropylene to be compared with the polymer of this invention.

The results of evaluation were as shown in Table 1. As is apparent from Table 1, when compared at a same level of flexural modulus of 7000, said polypropylene showed a low Vicat softening point, poor heat resistance and small melt tension.

Comparative Example 3

Sumitic (a registered trade mark) SH-11 (made by Sumitomo Chemical Co., Ltd.) which is a commercially available atactic polypropylene obtained as a by-product in the production of conventional polypropylene was used to form a sheet by extrusion molding. Although the sheet was flexible, it had a tacky surface and was unsuitable for practical applications.

Comparative Example 4

The polymerization in Example 1 was repeated except that no ethyl p-anisate was used to yield 280 g of a mixture of the polymer formed and the seed polymer. The catalyst activity in this case was 1500 g/g solid/hour. The polymer formed was obtained by separating the seed polymer in the same manner as in Examples. Its bulk density was 0.24 g/ml. The results of evaluation were as shown in Table 1. A sheet formed of the polymer had a very tacky surface and was unsuitable for practical use.

Comparative Example 5

A polypropylene having the structure and physical properties shown in Table 1 was examined. Although it had a high flexural modulus, it lacked flexibility and had an extremely low impact strength.

6

TABLE 1

| Item | Whole polymer | | | | | | HSP[2] | HIP[3] | | | | | | | | |
|---|---|---|---|---|---|---|---|---|---|---|---|---|---|---|---|---|
| Example No. | $\overline{MW}/\overline{MN}$[1] | [η] | [mmmm] frac-tion | MFR | $T_f$[4] (°C) | $\Delta H_f$[5] J/g | [η] | [η] | [mmmm] frac-tion | [mmmr]+ [rrrr]+ [rrrm] fraction | MI (10 g/ min.) | Melt tension | Vicat soften-ing temp. (°C)[6] | Flexural modulus[7] (kN/cm²) | Izod impact strength (23°C)[8] (N · cm/cm²) | Remarks |
| Example 1 | 25 | 2.9 | 0.69 | 180 | 160 | 63 | 1.3 | 3.3 | 0.80 | 0.11 | 0.5 | 11 | 128 | 68.7 | No rupture | |
| „ 2 | 35 | 2.5 | 0.60 | 165 | 158 | 46 | 1.2 | 3.0 | 0.73 | 0.15 | 1 | 8 | 105 | 28.9 | „ | |
| „ 3 | 21 | 1.6 | 0.68 | 125 | 160 | 63 | 1.0 | 2.6 | 0.85 | 0.13 | 10 | — | 125 | 58.9 | 68.7 | |
| „ 4 | 30 | 4.0 | 0.77 | 240 | 162 | 75 | 1.3 | 4.4 | 0.87 | 0.10 | 0.08 | >20 | 138 | 88.3 | No rupture | |
| „ 5 | 59 | 2.0 | 0.50 | 140 | 156 | 29 | 1.1 | 3.5 | 0.70 | 0.23 | 3 | — | 85 | 14.7 | „ | |
| Comparative Example 1 | 6 | 2.7 | 0.94 | 120 | 166 | 105 | 0.5 | 2.8 | 0.96 | 0.02 | 0.7 | 6 | — | 127.5 | 49 | No flexi-bility |
| „ 2 | — | 2.3 | — | 110 | — | — | — | — | — | — | 1 | 3 | 119 | 68.7 | 98.1 | |
| „ 4 | — | 1.2 | 0.40 | — | 150 | 13 | — | — | — | — | — | — | — | — | — | Tacky |
| „ 5 | 5 | 1.5 | 0.93 | 100 | 167 | 109 | 0.3 | 1.6 | 0.95 | 0.03 | 12 | | | 157 | 19.6 | |

Note
[1] Weight average molecular weight/number average molecular weight,
[2] Boiling-heptane soluble portion,
[3] Boiling-heptane insoluble portion,
[4] Fusion temperature,
[5] Heat of fusion,
[6] According to JIS-K7206,
[7] According to JIS-K6758 (K7203),
[8] According to JIS-K 6758 (K7110).

Example 6

The propylene polymer of this invention obtained in Example 1 and the conventional polypropylene shown in Comparative Example 1 were used as samples to be tested in H-type blown film under the following processing conditions:

Apparatus

Extruder: 30 mmφ extruder (mfd. by Tanabe Plastics & Co.)

Screw: full flight type, L/D=28, C.R.=2.5

Die: diameter of 50 φ (spiral type) lip clearance 2 mm t

Processing conditions

Resin temperature: 210°C

Blow-up ratio: 3.2

Frost line height: 200 mm

Film thickness: 20 μm

Cooling method: air cooling

Take off speed: 10 m/min.

The results of blown film processing and physical properties of the film obtained were as shown in Table 2.

TABLE 2

| Sample | Processing characteristics | | | Film properties | |
|---|---|---|---|---|---|
| | Motor load (A) | Head pressure (bar) | Bubble stabi- lity* | Degree of uneven thickness | Dart impact strength** (N-cm/mm) |
| Example 1 | 11 | 88.3 | ◎ | small | 4905 |
| Comparative Example 1 | 13 | 137.3 | x | large | <981 |

Note:

*◎ excellent, o good, x poor

**ASTM D1709 (Method A)

It can be seen from Table 2 that, as compared with a conventional polypropylene, the propylene polymer of this invention has, despite its low MI, a very wide molecular weight distribution, (having thus a high MFR), so that it has the advantages of low back pressure at the head and also low motor load; and also when processed by H-type blown film, the bubble stability is excellent and a film having uniform thickness and high impact strength can be obtained.

Example 7

The propylene polymer of this invention obtained in Example 1 and the conventional polypropylenes shown in Comparative Examples 1 and 2 were used as samples to be tested in blow molding under the following processing conditions:

Blow molding machine: Kautex NB-3B blow molding machine (mfd. by The Japan Steel Works, Inc.)

Screw: cross-saw type, 50 mmφ, L/D=20, C.R.=1.8

Die: outside diameter 27.5 φ, inside diameter 24 φ, clearance 1.75 t.

Processing conditions

Resin temperature: 225°C

Output rate: 12 kg/hour

Molding cycle: parison descending time+blowing time (15 sec.)+exhausting time (2 sec.)

Mold: cylindrical bottle, height 500 mm, diameter 70 φ

The results of blow molding were as shown in Table 3.

TABLE 3

| | | | Processing characteristics | | |
|---|---|---|---|---|---|
| Sample | Melt tension (g) | Motor load (A) | Critical parison length* (mm) | Degree of uneven thickness of bottle, MD |
| Example 1 | 11 | 22 | 600 | small |
| Comparative Example 1 | 6 | 25 | 450 | medium |
| „  2 | 3 | 24 | 350 | large |

Note
   *The parison length at which the descending rate of the parison end begins to increase is referred to as the critical parison length. (It is implied that when the parison length exceeds the critical parison length, the draw-down phenomenon begins to take place).

   From Table 3, it can be seen that, as compared with a conventional polypropylene, the propylene polymer of this invention has, despite its low MI, a very wide molecular weight distribution and hence has the advantage of low motor load; and further, since the parison length at which draw down begins, namely the critical parison length, is very long, a blow-molded bottle with a low degree of uneven thickness in machine direction can be obtained. As to the properties of blow-molded bottles, those from the polymer of Example 1 showed a see-through clarity comparable with those from Comparative Example 2 and superior to those from Comparative Example 1. Bottles molded from the polymer of Example 1 had a better heat resistance (Vicat softening point) than those from Comparative Example 2, while their flexibilities are similar.

Example 8
   The propylene polymer of this invention obtained in Example 1 and the conventional polypropylene shown in Comparative Example 1 were used as samples to be tested in vacuum forming under the following processing conditions.

Sheet preparation conditions
   Extruder: Tanabe 50 φ extruder
   Screw: full flight type, L/D=24, C.R.=3.0
   Die: Coat-hanger die (500 mm width, lip: 0.5 mm t)
   Processing temp.: 250°C
   Cooling-roll temp.: 30°C
   Take-off speed: 3 m/min.
   Sheet thickness: 350 µm

Vacuum forming conditions
   Forming machine: Cosmic vacuum forming machine (mfd. by Asano Institute)
   Mold: Cup type (100 φ, variable depth type)
   Sheet dimension: 150×150×350 µm t
   Forming condition in deep drawing: 160 V, 30 sec. heating (Sheet surface temp. 155—160°C)
   The results of vacuum forming were as shown in Table 4.

TABLE 4

| Sample | Processability in deep drawing* | | | Processable temperature range*** | |
|---|---|---|---|---|---|
| | Draw ratio** 0.5 | Draw ratio 0.7 | Draw ratio 1.0 | Min. sheet surface temp. (°C) | Max. sheet surface temp. (°C) |
| Example 1 | o | o | o | 130 | 170 |
| Comparative Example 1 | o | Δ | x | 145 | 165 |

Note
*Grading
o: Good, with low degree of uneven thickness
Δ: Fairly thin around the bottom corner of the cup
x: Extremely thin around the bottom corner of the cup
**Draw ratio=Depth of mold (cup type) (mm)/100 mm
***Results obtained at a draw ratio of 0.5 are shown. At temperatures above the maximum sheet surface temperature, the sagging of sheet becomes large. At temperatures below the minimum sheet surface temperature, the sheet cannot be elongated sufficiently and whitening or rupture of the sheet can take place.

It can be seen from Table 4 that, as compared with conventional polypropylene, the propylene polymer of this invention has a far superior deep-drawing processability and can be processed by vacuum forming in a very wide temperature range.

Example 9
The propylene polymer of this invention obtained in Example 3 and a conventional polypropylene shown in Comparative Example 5 were used as samples to be tested in injection molding under the following processing conditions.

Injection molding conditions
(1) Measurement of spiral-flow length
Molding machine: Nikko N-140BII
Mold: Spiral flow type
(Dimensions of cross section: thickness 2 mm, width 10 mm, length 2000 mm)

Molding conditions
Cylinder temp.: 250°C
Mold temp.: 50°C
Injection pressure: about 833 bar
Injection rate: 100%

(2) Preparation of disc-shaped article
Molding machine: Nikko 5 oz injection machine
Mold: disc mold (200 mmφ, variable thickness type, 1 mm t, 3 mm t)
Cylinder temp.: 230°C
Mold temp.: 50°C
Injection pressure: about 840 bar
Cooling time: 40 sec.
The results of injection molding were as shown in Table 5.

# 0 114 391

## TABLE 5

| Sample | Spiral Flow length (mm) | Properties of molded article ESCR* $F_{50}$ (hour) |
|---|---|---|
| Example 3 | 700 | >1000 |
| Comparative Example 5 | 650 | 500 |

Note
*Determined according to ASTM-D1693 on disc-shaped molded article of 3 mm thickness (Artarox CO-630 10% by weight solution being used).

From Table 5, it can be seen that, as compared with conventional polypropylene, the propylene polymer of this invention shows a large spiral-flow length and good flowability in spite of its low MI, and, as to physical properties of molded articles, shows an excellent environmental stress cracking resistance (ESCR).

When molded into disc-shaped articles of 1 mm thickness, the propylene polymer of this invention showed better see-through clarity, less warpage, and more flexibility than conventional polymer.

## Claims

1. A flexible propylene polymer which is a propylene polymer obtained by gas-phase polymerization, said polymer being in particle form after polymerization and having a bulk density of at least 0.27 g/ml, wherein
   (1) the ratio of weight average molecular weight to number average molecular weight is from 10 to 100,
   (2) the intrinsic viscosity $[\eta]$ is from 0.8 to 10 dl/g,
   (3) in the steric pentad fraction as determined by $^{13}$C-NMR, the [mmmm] fraction is from 0.45 to 0.85,
   (4) the melt flow ratio (MFR) satisfies the following equation:

$$MFR \geqq -42 \log MI + 133,$$

wherein MI means melt index,
   (5) the fusion temperature is from 154 to 164°C,
   (6) the heat of fusion is from 5 to 22 cal/g (20.9 to 92.1 J/g),
   (7) the intrinsic viscosity $[\eta]_{HSP}$ of the boiling-heptane soluble portion (HSP) and the intrinsic viscosity $[\eta]_{HIP}$ of the boiling-heptane insoluble portion (HIP) of said polymer satisfies the following equation:

$$[\eta]_{HSP} \geqq 0.25 \ [\eta]_{HIP}, \text{ and}$$

   (8) in the steric pentad fraction of the above boiling-heptane insoluble portion as determined by $^{13}$C-NMR, the [mmmm] fraction is from 0.60 to 0.90 and the sum of the [mmmr], [rrrm] and [rrrr] fractions is from 0.07 to 0.30.

2. A flexible propylene polymer according to Claim 1, wherein the intrinsic viscosity is from 1.0 to 8.0 dl/g.

3. A flexible propylene polymer according to Claim 1, wherein the [mmmm] fraction is 0.50 to 0.85.

4. A process for producing a flexible propylene polymer of Claim 1, which comprises polymerizing propylene
   by gas-phase polymerization
   in the presence of a catalyst comprising (1) a solid catalyst component obtained by allowing silicon tetrachloride to react with an ethereal organo-magnesium compound and then treating the magnesium compound obtained with an aryloxytitanium halide or alkoxytitanium halide, (2) an organoaluminum compound component and (3) a carboxylic acid ester or lactone
   at 30°C to 80°C, and at a pressure of atmospheric pressure to about 39.2 bar (40 kg/cm²).

## Patentansprüche

1. Flexibles Propylen-Polymerisat, erhalten durch Gasphasenpolymerisation, wobei das Polymerisat nach der Polymerisation in Teilchenform vorliegt und eine Schüttdichte von mindestens 0,27 g/ml aufweist, und wobei

(1) das Verhältnis des Gewichtsmittels des Molekulargewichts zum Zahlenmittel des Molekulargewichts 10 bis 100 beträgt,

(2) die Viskosität (intrinsic viscosity) [η] 0,8 bis 10 dl/g beträgt,

(3) in der sterischen Pentade Struktur-Einheit, bestimmt durch $^{13}$C-NMR der [mmmm] Bruchteil 0,45 bis 0,85 beträgt,

(4) das Schmelzfluß-Verhältnis (MFR) die nachstehende Gleichung erfüllt:

$$MFR \geqq -42 \log MI + 133$$

in der MI den Schmelzindex bedeutet,

(5) die Schmelztemperatur 154 bis 164°C beträgt,

(6) die Schmelzwärme 5 bis 22 cal/g (20,9 bis 92,1 J/g) beträgt,

(7) die Viskosität (intrinsic viscosity) [η]$_{HSP}$ des in siedendem Heptan löslichen Anteils (HSP) und die Viskosität (intrinsic viscosity) [η]$_{HIP}$ des in siedendem Heptan unlöslichen Anteils (HIP) des Polymerisats die folgende Gleichung erfüllt:

$$[η]_{HSP} \geqq 0,25 \, [η]_{HIP} \text{ und}$$

(8) in der sterischen Pentade Struktur-Einheit des in siedendem Heptan unlöslichen Anteils, bestimmt durch $^{13}$C-NMR, der [mmmm] Bruchteile 0,60 bis 0,90 und die Summe der [mmmr], [rrrm] und [rrrr] Bruchteile 0,07 bis 0,30 beträgt.

2. Flexibles Propylen-Polymerisat nach Anspruch 1, wobei die Viskosität (intrinsic viscosity) 1,0 bis 8,0 dl/g beträgt.

3. Flexibles Propylen-Polymerisat nach Anspruch 1, wobei der [mmmm] Bruchteil 0,50 bis 0,85 ist.

4. Verfahren zur Herstellung eines flexiblen Propylen-Polymerisats nach Anspruch 1, dadurch gekennzeichnet, daß man Propylen durch Gasphasenpolymerisation bei 30°C bis 80°C und einem Druck von Atmosphärendruck bis etwa 39,2 bar (40 kg/cm$^2$) in Gegenwart eines Katalysators umfassend

(1) eine feste Katalysator-Komponente, die erhalten wird durch Umsetzen von Siliciumtetrachlorid mit einer in Äther gelösten Organomagnesium-Verbindung und Behandeln der erhaltenen Magnesiumverbindung mit einem Aryloxytitanhalogenid oder Alkoxytitanhalogenid,

(2) eine Organoaluminium-Verbindung und

(3) einen Carbonsäureester oder ein -lacton polymerisiert.

**Revendications**

1. Polymère de propylène flexible qui est un polymère de propylène obtenu par polymérisation en phase gazeuse, ce polymère se présentant sous forme de particules à la suite de la polymérisation et ayant une masse volumique apparente d'au moins 0,27 ·g/ml, caractérisé en ce que

(1) le rapport du poids moléculaire moyen en poids au poids moléculaire moyen en nombre est compris entre 10 et 100,

(2) la viscosité intrinsèque [η] est comprise entre 0,8 et 10 dl/g,

(3) dans la fraction des pentades stériques, déterminée par RMN de $^{13}$C, la fraction [mmmm] est comprise entre 0,45 et 0,85,

(4) le rapport d'écoulement à l'état fondu (MFR) satisfait à l'équation suivante

$$MFR \geqq -42 \log MI + 133$$

dans laquelle MI désigne l'indice de fluidité,

(5) la température de fusion est comprise entre 154 et 164°C,

(6) la chaleur de fusion est comprise entre 5 et 22 cal/g (20,9 et 92,1 J/g),

(7) la viscosité intrinsèque [η]$_{HSP}$ de la partie soluble dans l'heptane bouillant (HSP) et la viscosité intrinsèque [η]$_{HIP}$ de la partie insoluble dans l'heptane bouillant (HIP) satisfont à l'équation suivante

$$[η]_{HSP} \geqq 0,25 \, [η]_{HIP}, \text{ et}$$

(8) dans la fraction des pentades stériques de la partie insoluble dans l'heptane bouillant précitée, déterminée par RMN $^{13}$C, la fraction [mmmm] est comprise entre 0,60 et 0,90 et la somme des fractions [mmmr], [rrrm] et [rrrr] est comprise entre 0,07 et 0,30.

2. Polymère de propylène flexible selon la revendication 1, caractérisé en ce que la viscosité intrinsèque est comprise entre 1,0 et 8,0 dl/g.

3. Polymère de propylène flexible selon la revendication 1, caractérisé en ce que la fraction [mmmm] est comprise entre 0,50 et 0,85.

4. Procédé de préparation d'un polymère de propylène flexible selon la revendication 1, consistant à polymériser du propylène

par polymérisation en phase gazeuse,

en présence d'un catalyseur comprenant (1) un composant de catalyseur solide obtenue en faisant réagir du tétrachlorure de silicium avec un composé organo-magnésien en solution dans un éther et un traitant le composé du magnésium obtenu par un halogénure d'aryloxytitane ou un halogénure d'alcoxy-titane, (2) un composant formé par un composé organo-aluminique et (3) un ester ou une lactone d'acide carboxylique.

à une température de 30° à 80°C et à une pression comprise entre la pression atmosphérique et 39,2 bars environ (40 kg/cm²).